# DEMANDE DE BREVET EUROPEEN

(11) **EP 4 813 953 A1**
(43) Date de publication de la demande: **30.09.2026**
(21) Numéro de dépôt: 26167776.9
(22) Date de dépôt: 25.03.2026
(51) Int. Cl.: C04B 28/14, C04B 111/21

(54) **COMPOSITION SOLIDE POUR PRODUITS EN PLÂTRE**

(30) Priorité: 28.03.2025 BE 202505186
(71) Demandeur: N. et B. Knauf et Cie, 4480 Engis (BE)
(72) Inventeur: BRASSEUR, Alain, 4480 Engis (BE); LACROIX, Christian, 4480 Engis (BE)
(74) Mandataire: Calysta NV

(57) **Abrégé**

L'invention concerne une composition solide pour produits en plâtre comprenant :
- Au moins 80 % en poids, de préférence entre 85 et 95 % en poids, plus préférentiellement entre 85 et 90 % en poids de sulfate de calcium hémi-hydraté qui comprend des ions sodium (repris ci-après sous SC-Na),
caractérisée en ce qu'elle comprend en outre entre 0,01 et 1 % en poids de formiate de calcium, par rapport au poids de Sc-Na, qui présente une distribution de taille de particule d95 inférieure ou égale à 200 µm.

## Description

La présente invention se rapporte à une composition solide pour produits en plâtre, à son procédé de fabrication ainsi qu'à la fabrication de produits en plâtre à partir de sulfate de calcium hémi-hydraté qui comprend des ions sodium.

Le sulfate de calcium hémi-hydraté peut résulter de la production industrielle d'acide phosphorique dans le cadre d'une attaque à l'acide sulfurique d'un minerai de phosphate.

Le sulfate de calcium est ainsi un sous-produit qui peut sous forme hémi-hydratée être utilisé dans l'industrie du plâtre. Comme il provient de procédés industriels, il peut comprendre des impuretés qui conduisent à la formation d'efflorescence.

L'efflorescence est un phénomène physico-chimique qui se manifeste par l'apparition de dépôts blanchâtres en surface d'un matériau solide. Elle résulte de la migration et de la cristallisation de sels solubles à la surface du matériau sous l'effet de l'évaporation de l'eau.

Lorsqu'une composition solide contenant du sulfate de calcium hémi-hydraté (CaSO₄ ·0,5H2O) en présence d'ions sodium (Na⁺) est mise en solution, l'efflorescence est particulièrement susceptible de se produire en raison des interactions entre ces composants et l'eau.

Le processus d'efflorescence dans un matériau solide contenant du sulfate de calcium hémi-hydraté et des ions sodium suit plusieurs étapes.

Lorsque la composition est hydratée (pendant la prise du plâtre ou en présence d'humidité), les sels solubles présents, comme le sulfate de sodium (Na₂SO₄) se dissolvent dans l'eau contenue dans la structure du matériau.

Le sulfate de calcium lui-même est relativement peu soluble dans l'eau, mais la présence d'ions sodium peut favoriser la formation de sels plus solubles.

L'eau chargée en ions sodium (Na⁺) se déplace ainsi par capillarité à travers la structure poreuse du matériau. Cette migration est amplifiée dans des conditions de séchage lent ou d'humidité ambiante fluctuante, où l'eau évapore progressivement tout en transportant les sels dissous à travers la partie solide.

Lorsque l'eau atteint la surface du matériau et s'évapore, elle laisse derrière elle les sels dissous qui se cristallisent sous forme de dépôts blanchâtres. Les sels majoritaires dans ces efflorescences sont souvent du sulfate de sodium (Na₂SO₄) qui forment une couche poudreuse visible.

Cela présente plusieurs inconvénients, notamment un aspect esthétique dégradé avec des dépôts visibles sur la surface du matériau, un affaiblissement mécanique possible si les cristaux de sels provoquent des tensions internes et des microfissures, une reprise d'humidité dans les sels hygroscopiques comme le sulfate de sodium, ce qui peut maintenir un taux d'humidité élevé dans le matériau et accentuer les risques de dégradation.

Il est connu d'utiliser un sulfate de calcium avec un degré de pureté élevé mais cela nécessite d'appliquer des étapes de procédés additionnelles ce qui rend un tel procédé peu attractif en termes de cout de production.

Il est également possible d'éviter les variations brusques d'humidité et favoriser un séchage progressif et contrôlé. Toutefois, la mise en œuvre à échelle industrielle est complexe et énergivore.

Il est également connu d'appliquer des traitements de surface hydrophobes pour limiter l'évaporation rapide de l'eau.

Toutefois, les méthodes appliquées jusqu'ici n'empêchent pas l'efflorescence sur le long terme.

Le document FR 2 200 218 décrit un procédé de fabrication de produits en plâtre non efflorescents. Cet enseignement préconise l'ajout de sels d'acides chlorhydrique, bromhydrique, nitrique, borique, fluosilicique, sulfamique, glutamique et fumarique avant la prise de la composition solide qui comprend du sulfate de calcium.

Il existe aussi d'autres composés qu'on ajoute au sulfate de calcium afin de diminuer le phénomène d'efflorescence.

Malheureusement, les industriels sont dépendant des coûts liés aux matières premières qui fluctuent avec les marchés. Par conséquent, les quantités utilisées représentent un investissement financier pour les industriels.

De plus, l'ajout de composés permettant de diminuer le phénomène d'efflorescence peut influer négativement sur les temps de prise de la composition de plâtre et sur la quantité des composés utilisés. En effet, il existe un besoin de pouvoir fournir une composition solide sans efflorescence capable d'alimenter une ligne de production industrielle de produits en plâtre fonctionnant en continu et sans arrêts fréquents.

Actuellement, il n'est pas garanti que les procédés connus permettent de tels avancées dans le domaine de l'industrie du plâtre.

Lorsque le temps de prise n'est pas bien maîtrisé, cela conduit à un manque de reproductibilité des produits formés à partir de la composition solide.

Il serait ainsi avantageux de bénéficier d'une composition pour fournir des produits en plâtre qui évite toute efflorescence au cours du temps dans des produits en plâtre, tout en étant aisée à obtenir, et permettre une intégration aisée et contrôlée sur une ligne de production fonctionnant en continu en termes d'homogénéité et de stabilité liées au temps de prise de la composition solide.

Pour résoudre ce problème, la présente invention fournit une composition solide pour produits en plâtre comprenant :
- Au moins 80 % en poids, de préférence entre 85 et 95 % en poids, plus préférentiellement entre 85 et 90 % en poids de sulfate de calcium hémi-hydraté qui comprend des ions sodium (repris ci-après sous SC-Na), caractérisée en ce qu'elle comprend en outre entre 0,01 et 1 % en poids de formiate de calcium, de préférence entre 0,05 et 1 % en poids, plus préférentiellement entre 0,1 et 1 % en poids, avantageusement entre 0,3 et 1 % en poids, par rapport au poids de Sc-Na, et qui présente une distribution de taille de particule d95 inférieure ou égale à 200 µm.

Dans le cadre de la présente invention, il a été surprenant de constater que la granulométrie du formiate de calcium permet de fournir une composition solide dont le temps de prise est mieux contrôlé, homogène et stable pour une ligne de production industrielle fonctionnant en continu, de préférence sans interruptions.

Le contrôle du temps de prise est avantageusement réalisé toutes les 30 tonnes produites. Lorsque le temps de prise est mesuré en dehors des spécifications, celui-ci peut être corrigé à l'aide de retardateurs de prise. Si la correction à réaliser est trop importante, la production doit être isolée ou stoppée afin de rectifier la recette.

En effet, la finesse du formiate de calcium selon l'invention permet d'avoir un meilleur contrôle sur la composition solide lorsque celle-ci est en cours de prise, après addition d'eau, pour former des produits en plâtre et éviter les inconvénients précités.

Si le formiate de calcium présente une granulométrie supérieure à 200 µm, il a été constaté que le produit en plâtre obtenu avec une telle composition solide présente des irrégularités de surface, des grains qui corrompent les performances du matériau au cours du temps.

Il a ainsi été étonnant de constater qu'une distribution de taille de particule d95 inférieure à 200 µm du formiate de calcium permet de surmonter tous les inconvénients de l'état de la technique sur le long terme, ce qui est avantageux pour les industriels.

Il a également été observé que pour une quantité donnée en formiate de calcium, celle-ci a pu encore être diminuée ce qui permet d'ajuster sa teneur en fonction des besoins et d'économiser sur les coûts du procédé, sans impacter sur la qualité du produit final ou sur le temps de prise de la composition solide.

Dans le cadre de la présente invention, ledit sulfate de calcium hémi-hydraté comprend avantageusement des ions sodium dans une quantité comprise entre 0,1 et 0,5 % en poids, de préférence entre 0,1 et 0,25 % en poids, par rapport au poids total dudit sulfate de calcium hémi-hydraté.

Dans le cadre de la présente invention, la teneur en ions sodium (Na⁺) dans le sulfate de calcium hémi-hydraté est déterminée par analyse chimique après mise en solution acide de l'échantillon.

De préférence, la teneur en sodium est déterminée par spectrométrie d'émission atomique à plasma induit (ICP-OES) ou par spectrométrie de masse à plasma induit (ICP-MS), après dissolution complète d'un échantillon représentatif dans une solution acide, par exemple une solution d'acide nitrique dilué.

À titre alternatif, la teneur en sodium peut être déterminée par spectrométrie d'absorption atomique (AAS) ou par chromatographie ionique après extraction aqueuse contrôlée.

Les résultats sont exprimés en pourcentage massique de sodium (Na⁺) par rapport à la masse totale de sulfate de calcium hémi-hydraté analysée.

Un échantillon représentatif du sulfate de calcium hémi-hydraté est avantageusement préalablement séché à 40-50 °C jusqu'à masse constante, puis finement broyé. Environ 0,5 g de matière est dissous sous agitation dans une solution d'acide nitrique (HNO₃) dilué. Après filtration si nécessaire, la teneur en sodium est mesurée par ICP-OES étalonnée à l'aide de solutions standards de sodium. La teneur est exprimée en % en poids de Na⁺ par rapport à la masse sèche initiale de l'échantillon.

Le sulfate de calcium hémi-hydraté utilisé selon l'invention résulte avantageusement du grillage d'un sulfate de calcium dihydraté issu de la fabrication d'acide phosphorique par attaque sulfurique d'un minerai de phosphate.

En raison de cette origine industrielle, ledit sulfate de calcium hémi-hydraté contient naturellement des ions sodium résiduels, généralement dans une teneur comprise entre 0,1 et 0,5 % en poids par rapport à sa masse totale, sans qu'un ajout volontaire de sodium ne soit réalisé.

De préférence, maximum 5 % des particules de formiate de calcium présentent une distribution de taille de particule supérieure à 200 µm, de préférence comprise entre 200 et 1500 µm. Cela permet d'avoir un mélange de granulométrie entre une fraction majoritaire fine (d95 ≤ 200 µm) et une fraction plus grossière en moindre quantité afin d'avoir un effet bénéfique sur le temps de prise et les propriétés mécaniques du produit en plâtre.

Plus préférentiellement, ledit SC-Na présente une distribution de taille de particule moyenne comprise entre 5 et 30 µm, de préférence entre 10 et 20 µm, plus préférentiellement entre 14 et 18 µm. Le mélange solide entre le formiate de calcium selon l'invention et le SC-Na qui présente une telle granulométrie est idéal pour solutionner les inconvénients rencontrés dans l'état de la technique.

Avantageusement, la composition solide selon l'invention comprend au moins un retardateur choisi dans le groupe comprenant au moins un acide faible, de préférence sous forme solide. Il a été constaté que la combinaison entre le formiate de calcium et le retardateur permet d'encore mieux gérer le temps de prise de la composition solide suivant l'invention. En effet, l'ajout de formiate de calcium peut accélérer le temps de prise qui sera aisément ajusté avec l'ajout de retardateur afin d'encore mieux homogénéiser le temps de prise sur une ligne de production industrielle fonctionnant en continu, de préférence sans interruptions.

Plus avantageusement, ledit au moins un retardateur est présent dans une quantité comprise entre 0,01 et 0,3 % en poids, de préférence entre 0,15 et 0,25 % en poids, par rapport au poids total de SC-Na.

Selon un mode préféré, le rapport massique entre ledit retardateur et ledit formiate de calcium est compris entre 0,2 et 0,4. Cela est particulièrement avantageux en termes de quantité utilisée dans la composition qui est raisonnable et qui permet d'optimiser les coûts liés à ces matières.

Selon un mode particulièrement préféré, la composition selon l'invention comprend du sulfate de calcium anhydre dans une teneur comprise entre 0 et 5 % en poids, de préférence entre 0 et 3 % en poids, par rapport au poids total du SC-Na.

De préférence, ledit SC-Na résulte du grillage d'un sulfate de calcium dihydraté qui a été obtenu lors de la fabrication d'acide phosphorique à partir de phosphate brut (roche) et d'acide sulfurique.

D'autres formes de réalisation de la composition solide selon l'invention sont indiquées dans les revendications annexées.

La présente invention se rapporte aussi à un procédé pour former une composition solide selon l'invention pour fabriquer des produits en plâtres résultant du temps de prise de ladite composition solide, le procédé comprenant les étapes suivantes :
- Fournir du sulfate de calcium hémi-hydraté qui comprend des ions sodium (repris ci-après sous SC-Na) dans une quantité d'au moins 80 % en poids, de préférence comprise entre 85 et 95 % en poids, plus préférentiellement entre 85 et 90 % en poids par rapport au poids total de la composition solide,
caractérisé en ce que, avant la prise du SC-Na, est ajouté à celui-ci du formiate de calcium qui présente une distribution de taille de particule d95 inférieure à 200 µm dans une teneur comprise entre 0,01 et 1 % en poids, de préférence entre 0,05 et 1 % en poids, plus préférentiellement entre 0,1 et 1 % en poids, avantageusement entre 0,3 et 1 % en poids, par rapport au poids total de SC-Na, et formation de la composition solide prête à l'usage.

Le procédé amélioré selon l'invention permet de fournir des produits en plâtre à partir d'une composition solide de sulfate de calcium contenant des ions sodium, le procédé étant plus efficace et aisé à mettre en œuvre. Le procédé permet aussi d'avoir un contrôle sur la ligne de production fonctionnant en continu en termes d'homogénéité et de stabilité liées au temps de prise de la composition solide.

Ainsi, la granulométrie du formiate de calcium permet de fournir une composition solide dont le temps de prise est mieux contrôlé, homogène et stable pour une ligne de production industrielle fonctionnant en continu, de préférence sans interruptions.

Notons que la quantité de formiate de calcium peut encore être ajustée vers le bas sans effets néfastes sur le temps de prise ou sur les propriétés mécaniques du produit en plâtre.

La quantité de SC-Na utilisée dans le cadre de la présente invention permet de valoriser des sous-produits industriels, provenant notamment de procédés de production d'acide phosphorique dans l'industrie du plâtre.

De préférence, maximum 5 % des particules de formiate de calcium présentent une distribution de taille de particule supérieure à 200 µm, de préférence comprise entre 200 et 1500 µm. Cela permet d'avoir un mélange de granulométrie entre une fraction majoritaire fine (d95 ≤ 200 µm) et une fraction plus grossière en moindre quantité afin d'avoir un effet bénéfique sur le temps de prise et les propriétés mécaniques du produit en plâtre.

Plus préférentiellement, ledit SC-Na est fourni avec une distribution de taille de particules moyenne comprise entre 5 et 30 µm, de préférence entre 10 et 20 µm, plus préférentiellement entre 14 et 18 µm.

Avantageusement, ledit formiate de calcium a été préalablement broyé dans un broyeur à broche pour obtenir la distribution de taille de particule d95 inférieure à 200 µm. L'étape de broyage permet d'obtenir la finesse granulométrique souhaitée. En effet, le formiate de calcium n'est généralement pas fourni dans la granulométrie indiquée dans le cadre de la présente invention. Ce type de broyeur à broche permet d'atteindre la taille de particules souhaitée.

De préférence, au moins un retardateur choisi dans le groupe comprenant au moins un acide faible est ajouté audit SC-Na en présence dudit formiate de calcium. De préférence, ledit au moins un acide faible est ajouté sous forme solide.

Il a été constaté que la combinaison entre le formiate de calcium et le retardateur permet d'encore mieux gérer le temps de prise de la composition solide obtenue selon le procédé suivant l'invention. En effet, l'ajout de formiate de calcium peut accélérer le temps de prise qui sera aisément ajusté avec l'ajout de retardateur afin d'encore mieux homogénéiser le temps de prise sur une ligne de production industrielle fonctionnant en continu, de préférence sans interruptions.

Selon un mode préféré, ledit au moins un retardateur est ajouté dans une quantité comprise entre 0,01 et 0,3 % en poids, de préférence entre 0,15 et 0,25 % en poids par rapport au poids total de SC-Na.

De préférence, ledit SC-Na résulte du grillage d'un sulfate de calcium dihydraté qui a été obtenu lors de la fabrication d'acide phosphorique à partir de phosphate brut (roche) et d'acide sulfurique.

Plus préférentiellement, ledit SC-Na est fourni en présence de sulfate de calcium anhydre dans une teneur comprise entre 0 et 5 % en poids, de préférence entre 0 et 3 % en poids par rapport au poids total du SC-Na.

Avantageusement, le procédé selon l'invention comprend une étape de prise (par addition d'eau) de la composition solide de plâtre pour former des produits en plâtre choisi dans le groupe comprenant les enduits, les sous-couches, les plaques de plâtres, les blocs de plâtres, les moulures, ....

Plus avantageusement, ladite composition solide de plâtre présente une durée de prise d'au moins 15 min, de préférence au moins 20 minutes, après addition d'eau, de préférence lors de la mise en œuvre de produits en plâtre. En effet, en-dessous de 15 minutes de temps de prise, le phénomène d'efflorescence est moins visible et moins problématique. Ainsi, au-delà de 15 minutes, de préférence au-dessus de 20 minutes, le temps de prise peut avoir plus d'influence sur le phénomène d'efflorescence.

D'autres formes de réalisation du procédé selon l'invention sont indiquées dans les revendications annexées.

L'invention a également trait à un produit en plâtre comprenant la composition selon l'invention.

D'autres formes de réalisation du produit selon l'invention sont indiquées dans les revendications annexées.

L'invention se rapporte aussi à une utilisation de formiate de calcium présentant une distribution de taille de particule d95 inférieure ou égale à 200 µm dans une composition solide comprenant au moins 80 % en poids, de préférence entre 85 et 95 % en poids, plus préférentiellement entre 85 et 90 % en poids, par rapport au poids total de la composition solide, de SC-Na pour former des produits en plâtre.

D'autres formes de réalisation de l'utilisation selon l'invention sont indiquées dans les revendications annexées.

D'autres caractéristiques et avantages de la présente invention seront tirés de la description non limitative qui suit, et en faisant référence aux dessins et aux exemples.

La notation d95 représente un diamètre exprimé en µm, par rapport auquel la taille de 95 % en volume des particules mesurées est inférieure ou égale à ce diamètre. Ainsi, le d95 ≤ 200 µm signifie que 95 % en volume des particules ont un diamètre inférieur ou égal à 200 µm.

La distribution granulométrique d'un échantillon peut être déterminée par différentes méthodes connues de la personne du métier : dont la diffraction laser, le tamisage à jet d'air, les méthodes optiques, etc.

Dans le cadre de la présente invention, le d95 est déterminé par diffraction laser, par exemple au moyen d'un granulomètre de type Beckman Coulter LS 13 320 (ou dispositif équivalent).

À titre de contrôle complémentaire, la fraction de particules de taille supérieure à 200 µm peut être évaluée par tamisage à jet d'air sur un tamis de 200 µm, au moyen d'une tamiseuse à jet d'air (par exemple du fournisseur Retsch).La mesure de la granulométrie est avantageusement réalisée selon la norme NBN EN 13279-2.

La diffraction laser peut également être sollicitée, notamment avec un appareil Beckman Coulter LS 13320.

L'invention permet ainsi de fabriquer par exemple des plaques de plâtre ou des enduits.

Selon un mode de réalisation préféré, on peut fabriquer des plaques de plâtre à partir du gypse récupéré lors de la production d'acide phosphorique afin de valoriser un sous-produit industriel. D'abord, le gypse, qui se présente sous forme de dihydraté (CaSO₄·2H₂O), est récupéré après réaction du phosphate avec de l'acide sulfurique. Il peut subir ensuite une préparation qui consiste à le broyer et à le purifier afin d'éliminer les impuretés éventuelles et d'obtenir une poudre homogène.

Le gypse ainsi traité est ensuite chauffé dans un four. Cette étape de calcination partielle permet de transformer le dihydraté en hémihydrate en éliminant une partie de l'eau de cristallisation. L'hémihydrate, plus réactif, est alors mélangé avec de l'eau et divers additifs - tels que des retardateurs de prise, des liants et parfois des fibres - pour former une pâte homogène. Dès que l'eau est ajoutée, une réaction d'hydratation exothermique se déclenche, reconstituant progressivement le dihydraté et solidifiant la pâte.

La pâte obtenue est ensuite coulée en continu entre deux feuilles de papier ou de carton spécialement conçues pour constituer les faces de la plaque. Grâce à la réaction d'hydratation, la plaque se solidifie en quelques minutes. Pour parfaire le produit, les plaques sont ensuite transférées dans des chambres de séchage où l'excès d'humidité est éliminé, garantissant ainsi leur stabilité et leurs performances mécaniques. Enfin, les plaques séchées sont découpées aux dimensions standard, inspectées et emballées, prêtes à être utilisées dans la construction.

Ce procédé permet non seulement de produire un matériau de construction léger, isolant et ignifuge, mais il contribue également à la valorisation d'un sous-produit industriel, offrant ainsi une alternative écologique à l'exploitation minière traditionnelle du gypse.

Selon l'invention, il est également possible de fournir des enduits par exemple.

Le plâtre, obtenu par la cuisson du gypse pour former une poudre mélangée à de l'eau, permet de réaliser des enduits intérieurs lisses et esthétiques grâce à sa facilité d'application, sa malléabilité et son temps de prise rapide, tout en laissant le mur respirer pour évacuer l'humidité.

La composition selon l'invention permet ainsi de contrôler la préparation d'un tel support afin d'éviter des problèmes d'efflorescence.

Les exemples ci-dessous permettent d'illustrer l'invention plus en détails, y compris au vu d'un exemple comparatif afin de mettre en exergue les avantages obtenus dans le cadre de la présente invention.

### Exemple 1

On fournit 97,6 % en poids d'un sulfate de calcium hémi-hydraté contenant des ions sodium et qui présente une distribution de taille de particule moyenne de 15 µm, provenant du grillage d'un sulfate de calcium dihydraté obtenu lors de la fabrication d'acide phosphorique à partir d'une roche de phosphate et d'acide sulfurique. On broie un formiate de calcium jusqu'à atteindre un d95 inférieur à 200 µm. Ensuite, on ajoute 0,4 % en poids de formiate de calcium et 0,2 % en poids de retardateur, par rapport au poids du sulfate de calcium hémi-hydraté.

La composition solide obtenue est ensuite mélangée avec de l'eau pour permettre la prise de la composition afin de fournir un produit en plâtre.

Aucune efflorescence n'a été observée sur la ligne de production.

### Exemple 2

L'exemple 1 est reproduit, excepté que le retardateur n'est pas ajouté. A nouveau, aucune efflorescence n'apparait dans le produit en plâtre.

### Exemple 3

On fournit un sulfate de calcium hémi-hydraté contenant des ions sodium et qui présente une distribution de taille de particule moyenne de 20 µm, provenant du grillage d'un sulfate de calcium dihydraté obtenu lors de la fabrication d'acide phosphorique à partir d'une roche de phosphate et d'acide sulfurique. On broie un formiate de calcium jusqu'à atteindre un d95 inférieur à 200 µm. Ensuite, on ajoute 0,05 % en poids de formiate de calcium, par rapport au poids du sulfate de calcium hémi-hydraté.

La composition solide obtenue est ensuite mélangée avec de l'eau pour permettre la prise de la composition afin de fournir un produit en plâtre.

Aucune efflorescence n'a été observée sur la ligne de production.

### Exemple comparatif

L'exemple 1 a été reproduit avec un formiate de calcium disponible sur le marché et dont le d95 est supérieur à 200 µm. Aucune étape de broyage n'a été appliquée.

Le temps de prise du produit est plus difficile à contrôler sur une ligne de production industrielle ce qui nécessite des arrêts fréquents pour la mise en forme de la composition solide afin d'essayer d'influencer positivement le temps de prise.

De plus, le produit en plâtre obtenu présente une surface graineuse et pas plane, avec des caractéristiques mécaniques non souhaitées.

Les articles « un » et « une » sont utilisés ici pour faire référence à un ou plus d'un (à savoir, à au moins un) des objets grammaticaux de l'article et peuvent être remplacés par un article qui désigne un pluriel comme par exemple au « moins 2 », « au moins 3 », « plusieurs » etc..

Les expressions « dans un mode de réalisation », « selon un mode de réalisation » et autres signifient généralement que la particularité, structure ou caractéristique particulière suivant l'expression est incluse dans au moins un mode de réalisation de la présente divulgation, et peut être incluse dans plus d'un mode de réalisation de la présente divulgation. Il est important de noter que de telles expressions ne font pas nécessairement référence au même mode de réalisation.

Si le texte indique qu'un composant ou une particularité « peut », ou « pourrait » être incluse ou avoir une caractéristique, il n'est pas nécessaire que ce composant ou cette particularité particulier (particulière) soit inclus(e) ou ait la caractéristique.

S'il apparait ici, le terme « comprenant » ou « contenant » et les dérivés de ceux-ci ne sont pas destinés à exclure la présence d'un quelconque composant, étape ou procédure additionnel, que celui-ci soit divulgué ou non ici. Afin d'éviter tout doute, le terme « comprenant » peut inclure tout élément / additif, adjuvant ou composé additionnel, sauf indication contraire. Par contraste, le terme « essentiellement constitué de », s'il apparait ici, exclut de la portée de toute citation suivante tout autre composant, étape ou procédure, à l'exception de ceux qui ne sont pas essentiels à l'opérabilité et le terme « constitué de », s'il est utilisé, exclut tout composant, étape ou procédure non spécifiquement défini ou indiqué. Les termes « ou » et « et/ou », sauf indication contraire, font référence aux membres indiqués individuellement ainsi que dans toute combinaison. Par exemple, l'expression A et/ou B fait référence à A seul, à B seul, ou à A et B. De plus, le terme et tout équivalent à « comprenant » peut être remplacé par « constitué de ».

Aussi, les termes « obtenable » ou « pouvant être obtenu » ou tout expression similaire ou dérivées peuvent être remplacés par « directement obtenu ».

Il est bien entendu que la présente invention n'est en aucune façon limitée aux formes de réalisations décrites ci-dessus et que bien des modifications peuvent y être apportées sans sortir du cadre des revendications annexées.

## Revendications

1. Composition solide pour produits en plâtre comprenant :
- Au moins 80 % en poids, de préférence entre 85 et 95 % en poids, plus préférentiellement entre 85 et 90 % en poids de sulfate de calcium hémi-hydraté qui comprend des ions sodium (repris ci-après sous SC-Na),
**caractérisée en ce qu'**elle comprend en outre entre 0,01 et 1 % en poids de formiate de calcium, de préférence entre 0,05 et 1 % en poids, plus préférentiellement entre 0,1 et 1 % en poids, avantageusement entre 0,3 et 1 % en poids, par rapport au poids de Sc-Na, et qui présente une distribution de taille de particule d95 inférieure ou égale à 200 µm.

2. Composition solide selon la revendication 1, dans laquelle maximum 5 % des particules de formiate de calcium présentent une distribution de taille de particule supérieure à 200 µm, de préférence comprise entre 200 et 1500 µm.

3. Composition solide selon la revendication 1 ou 2, dans laquelle ledit SC-Na présente une distribution de taille de particule moyenne comprise entre 5 et 30 µm, de préférence entre 10 et 20 µm, plus préférentiellement entre 14 et 18 µm.

4. Composition solide selon l'une quelconque des revendications précédentes, comprenant au moins un retardateur choisi dans le groupe comprenant au moins un acide faible, de préférence sous forme solide.

5. Composition solide selon l'une quelconque des revendications précédentes, dans laquelle ledit au moins un retardateur est présent dans une quantité comprise entre 0,01 et 0,3 % en poids, de préférence entre 0,15 et 0,25 % en poids, par rapport au poids total de SC-Na.

6. Composition solide selon l'une quelconque des revendications précédentes, dans laquelle le rapport massique entre ledit retardateur et ledit formiate de calcium est compris entre 0,2 et 0,4.

7. Composition solide selon l'une quelconque des revendications précédentes, dans laquelle ledit SC-Na résulte du grillage d'un sulfate de calcium dihydraté qui a été obtenu lors de la fabrication d'acide phosphorique à partir de phosphate brut (roche) et d'acide sulfurique.

8. Procédé pour former une composition solide selon l'une quelconque des revendications précédentes pour fabriquer des produits en plâtres résultant du temps de prise de ladite composition solide, le procédé comprenant les étapes suivantes :
- Fournir du sulfate de calcium hémi-hydraté qui comprend des ions sodium (repris ci-après sous SC-Na) dans une quantité d'au moins 80 % en poids, de préférence comprise entre 85 et 95 % en poids, plus préférentiellement entre 85 et 90 % en poids par rapport au poids total de la composition solide,
**caractérisé en ce que**, avant la prise du SC-Na, est ajouté à celui-ci du formiate de calcium qui présente une distribution de taille de particule d95 inférieure à 200 µm dans une teneur comprise entre 0,01 et 1 % en poids, de préférence entre 0,05 et 1 % en poids, plus préférentiellement entre 0,1 et 1 % en poids, avantageusement entre 0,3 et 1 % en poids, par rapport au poids total de SC-Na, et formation de la composition solide prête à l'usage.

9. Procédé selon la revendication 8, dans lequel ledit SC-Na est fourni avec une distribution de taille de particules moyenne comprise entre 5 et 30 µm, de préférence entre 10 et 20 µm, plus préférentiellement entre **14** et 18 µm.

10. Procédé selon l'une quelconque des revendications 8 à 9, dans lequel ledit formiate de calcium a été préalablement broyé dans un broyeur à broche pour obtenir la distribution de taille de particule d95 inférieure à 200 µm.

11. Procédé selon l'une quelconque des revendications 8 à 10, dans lequel au moins un retardateur choisi dans le groupe comprenant au moins un acide faible est ajouté audit SC-Na en présence dudit formiate de calcium.

12. Procédé selon l'une quelconque des revendications 8 à **11,** dans lequel ledit au moins un retardateur est ajouté dans une quantité comprise entre 0,01 et 0,3 % en poids, de préférence entre 0,15 et 0,25 % en poids par rapport au poids total de SC-Na.

13. Procédé selon l'une quelconque des revendications 8 à 12, dans lequel ledit SC-Na résulte du grillage d'un sulfate de calcium dihydraté qui a été obtenu lors de la fabrication d'acide phosphorique à partir de phosphate brut (roche) et d'acide sulfurique.

14. Procédé selon l'une quelconque des revendications 8 à 13, comprenant une étape de prise (par addition d'eau) de la composition solide de plâtre pour former des produits en plâtre choisi dans le groupe comprenant les enduits, les sous-couches, les plaques de plâtres, les blocs de plâtres, les moulures.

15. Produit en plâtre comprenant la composition selon l'une quelconque des revendications 1 à 7.
